(19) Europäisches Patentamt / European Patent Office / Office européen des brevets

(11) **EP 1 961 274 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(21) Anmeldenummer: **06830254.6**

(22) Anmeldetag: **30.11.2006**

(51) Int Cl.:
***H05B 41/288*** (2006.01)

(86) Internationale Anmeldenummer:
**PCT/EP2006/069161**

(87) Internationale Veröffentlichungsnummer:
**WO 2007/068604 (21.06.2007 Gazette 2007/25)**

(54) **SCHALTUNGSANORDNUNG UND VERFAHREN ZUM BETREIBEN EINER HOCHDRUCK-GASENTLADUNGSLAMPE**

CIRCUIT ARRANGEMENT AND METHOD FOR THE OPERATION OF A HIGH-PRESSURE GAS DISCHARGE LAMP

ENSEMBLE CIRCUIT ET PROCÉDÉ POUR FAIRE FONCTIONNER UNE LAMPE À DÉCHARGE À HAUTE PRESSION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.12.2005 DE 102005059764**

(43) Veröffentlichungstag der Anmeldung:
**27.08.2008 Patentblatt 2008/35**

(73) Patentinhaber: **OSRAM Gesellschaft mit beschränkter Haftung**
**81543 München (DE)**

(72) Erfinder: **MÜHLSCHLEGEL, Joachim**
**82194 Gröbenzell (DE)**

(56) Entgegenhaltungen:
**EP-A- 1 434 471    EP-A1- 0 397 334**
**EP-A1- 0 893 943**

• **DUK JIN OH ET AL: "A novel complex modulation method for the metal halide lamp ballast" 5. November 2002 (2002-11-05), IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002, ANNUAL CONFERENCE OF THE IEEE INDUSTRIAL ELECTRONICS SOCIETY, NEW YORK, NY : IEEE, US, PAGE(S) 377-382 , XP010633187 ISBN: 0-7803-7474-6 das ganze Dokument**

## Beschreibung

Technisches Gebiet

Die Erfindung betrifft eine Schaltungsanordnung zum Betreiben von Hochdruck-Gasentladungslampen. Hochdruck-Gasentladungslampen werden im folgenden auch kurz Lampen bezeichnet. Weiterhin betrifft die Erfindung ein Verfahren zum Betreiben derartiger Lampen. Insbesondere behandelt die Erfindung die Vermeidung akustischer Resonanzen, die beim Betrieb dieser Lampen auftreten können.

Stand der Technik

Akustische Resonanzen sind ein bekanntes Problem beim Betrieb von Hochdruck-Gasentladungslampen. Abhängig von der Geometrie und vom Druck der Lampe, treten diese Resonanzen in einem Frequenzbereich zwischen 5 kHz und 1000 kHz auf und können zu Bogenunruhe und bei ausgeprägten Resonanzen sogar zur Zerstörung der Lampe führen. Ein Betrieb einer Lampe mit einem Wechselstrom, der eine Frequenz im genannten Frequenzbereich aufweist, ist deshalb nicht ohne weiteres zuverlässig.

Auf dem Markt haben sich deshalb Betriebsgeräte verbreitet, die die Lampe im so genannten Rechteckbetrieb betreiben. Der Rechteckbetrieb erfordert allerdings einen hohen Schaltungsaufwand, weshalb es Bestrebungen gibt, die Lampe trotz der Gefahr der akustischen Resonanzen im sog. Hochfrequenzbetrieb zu betreiben. In diesem Betrieb werden die Lampen mit einem Wechselstrom im angegebenen Frequenzbereich gespeist, weil gerade im diesem Frequenzbereich ein Betriebsgerät besonders kostengünstig realisierbar ist.

In der Schrift US 2003/0111968A1 (Trestman) wird ein Betriebsgerät beschrieben, das eine Lampe mit einer Betriebsfrequenz betreibt, die frequenzmoduliert ist.

Ziel der Modulation ist es, dass ein Lampenstrom bei Frequenzen, bei denen die Lampe eine Resonanzstelle aufweist nur so kurz auf die Lampe einwirkt, dass sich keine Resonanz ausbildet.

Die Betriebsfrequenz wird im o. g. Stand der Technik in einem Bereich von 50 kHz um eine Mittenfrequenz moduliert. Gesteuert wird die Modulation von einer Restwelligkeit einer Versorgungsspannung. Die angegebene Schrift spricht von einer konstanten Versorgungsspannung, die eine an sich ungewollte Restwelligkeit von beispielsweise 6 Veff aufweist, die von einer speisenden Netzspannung verursacht wird. Die Restwelligkeit weist bei einer Netzfrequenz von 60 Hz aufgrund der Gleichrichtung 120 Hz auf. Der Lampenstrom weist somit eine Betriebsfrequenz auf, die mit einer Modulationsfrequenz von 120 Hz moduliert ist.

Nachteilig beim beschriebenen Stand der Technik ist, dass es trotz der modulierten Betriebsfrequenz zu störenden Resonanzerscheinungen kommt, falls nicht ein Frequenzbereich gewählt wird, in dem die Lampe nur schwache Resonanzen aufweist. Der Betriebsfrequenzbereich, der durch die Modulation überstrichen wird, meidet somit Frequenzbereiche in denen starke Hauptresonanzen der zu betreibenden Lampe auftreten. Damit ergibt sich im Stand der Technik, dass ein Frequenzbereich in dem sich die Betriebsfrequenz bewegt, an die zu betreibende Lampe angepasst werden muß. Der Stand der Technik gewährleistet nicht, dass zwei Lampen, die vergleichbare Leistungsdaten aufweisen im gleichen Frequenzbereich betrieben werden können.

In der Schrift EP 0 893 943 (Van Tichelen) ist ein Wechselrichter für eine Gasentladungslampe beschrieben, der die Betriebsfrequenz der Lampe schrittweise ändert, wobei die Zeitdauer, während der die Betriebsfrequenz konstant ist, proportional zum Wert der Betriebsfrequenz ist.

## Darstellung der Erfindung

Es ist Aufgabe der vorliegenden Erfindung, eine Schaltungsanordnung zum Betrieb von Hochdruck-Gasentladungslampen mit modulierter Betriebsfrequenz derart weiter zu entwickeln, dass auch dann, wenn die Betriebsfrequenz einen Frequenzbereich überstreicht, in dem die zu betreibende Lampe starke akustische Resonanzen aufweist, ein flackerfreier Betrieb der Lampe möglich ist.

Ausgangspunkt ist eine Schaltungsanordnung mit einem Wechselrichter, der an die Hochdruck-Gasentladungslampe einen Lampenstrom liefert, der im wesentlichen ein Wechselstrom mit einer Betriebsfrequenz ist, die in einem Frequenzbereich zwischen einer Minimalfrequenz und einer Maximalfrequenz frequenzmoduliert ist,

wodurch sich zum einen ein Grenz-Mittelwert definiert, der gleich der Hälfte der Summe von Minimalfrequenz und Maximalfrequenz ist,

und zum anderen ein arithmetischer Mittelwert definiert, der gleich dem zeitlichen Mittelwert der in einem Lampenbetrieb durchlaufenen Frequenzwerte für die Betriebsfrequenz ist,

wobei die Schaltungsanordnung dadurch gekennzeichnet ist, dass der Grenz-Mittelwert kleiner ist als der arithmetische Mittelwert. Die o.g. Aufgabe wird weiterhin gelöst durch eine Schaltungsanordnung gemäß Anspruch 1 und ein Verfahren gemäß Anspruch 13.

Der Erfindung liegt zunächst die Erkenntnis zugrunde, dass die Ausprägung der Resonanzstellen der Lampe im allgemeinen mit steigender Frequenz abnimmt. D. h. bei niedrigen Frequenzen ist es kritisch der Lampe viel Energie zur Verfügung zu stellen, da sich starke Resonanzen ausbilden können. Bei höheren Frequenzen hingegen kann der Lampe mehr Energie eingespeist werden, da die Resonanzen dort weniger ausgeprägt sind. Die erfindungsgemäße Lehre zum Handeln baut auf dieser Erkenntnis auf. Bei einer linearen Modulation, wie sie z. B. in EP 1 519 637 A2 (Butler) beschrieben ist, steigt die Betriebsfrequenz linear mit der Zeit an. Der arithmetische Mittelwert der Betriebsfrequenz hat in diesem Fall den gleichen Wert wie der Mittelwert aus der minimalen und der maximalen Frequenz, die die Betriebsfrequenz annimmt (Grenz-Mittelwert). Es wir kein Frequenzwert bevorzugt. Der Energieeintrag in die Lampe ist bei allen Frequenzwerten, die die Betriebsfrequenz annimmt, gleich.

In der Schrift US 2003/0111968A1 (Trestman) ist die Modulation sinusförmig. Damit ist der Energieeintrag in die Lampe nicht mehr bei allen Frequenzwerten gleich. Frequenzwerte in der Nähe der maximalen Frequenz und Frequenzwerte in der Nähe der minimalen Frequenz werden bevorzugt. Trotzdem ist der arithmetische Mittelwert der Betriebsfrequenz und der Grenz-Mittelwert gleich.

Bei einer erfindungsgemäßen Schaltungsanordnung ist der arithmetische Mittelwert der Betriebsfrequenz größer als der Grenz-Mittelwert. Dies hat zur Folge, dass der Energieeintrag in die Lampe bevorzugt bei höheren Frequenzwerten geschieht. Bei niedrigen Frequenzwerten wird vergleichsweise wenig Energie in die Lampe eingekoppelt, wodurch die dort vorherrschenden Resonanzstellen nur schwach angeregt werden. "Schwach angeregt" bedeutet in diesem Zusammenhang, dass die Energie, die die resonante Schwingung aufnimmt, nicht ausreicht, um einen Plasma- oder Gastransport im Entladungsgefäß zu bewirken. Eine Bogenunruhe und damit Flackererscheinungen werden damit vermieden. Als höhere Frequenzwerte werden Frequenzwerte bezeichnet, die über dem Grenz-Mittelwert liegen. Entsprechend liegen niedrige Frequenzwerte unter dem Grenz-Mittelwert.

Zur Bestimmung des Grenz-Mittelwerts wird nach obiger Definition der Mittelwert aus der Maximalfrequenz und der Minimalfrequenz zu bilden. Die Maximalfrequenz ist dabei der maximale Frequenzwert den die Betriebsfrequenz durch die Frequenzmodulation während des Betriebs einer Lampe annimmt. Frequenzwerte, die die Betriebsfrequenz z. B. während der Zündung annimmt werden nicht berücksichtigt. Auch nicht berücksichtigt werden Frequenzwerte die lediglich Fluktuationen der Betriebsfrequenz darstellen. Bei solchen Frequenzwerten wird kein nennenswerter Energiebetrag in die Lampe eingekoppelt. Typischerweise ist die Frequenzmodulation periodisch mit einer Periodendauer im 10 Millisekunden Bereich. Frequenzwerte, die während einer Periodendauer kürzer als 10 Mikrosekunden angenommen werden, sind als Fluktuationen zu betrachten. Das Leistungsspektrum der Lampenleistung ist typischerweise rechteckförmig, wobei das Plateau des Rechtecks auch eine mit steigender Frequenz ansteigende Rampe sein kann. Die Frequenzwerte, die das Rechteck begrenzen, markieren die Minimal- und die Maximalfrequenz. Frequenzwerte, die Fluktuationen darstellen, liegen außerhalb des Rechtecks und weisen eine Amplitude auf, die wesentlich unter dem Wert des Plateaus liegt.

Ein Aspekt der Erfindung ist die Bereitstellung eines kostengünstigen Betriebsgeräts mit Hilfe einer erfindungsmäßigen Schaltungsanordnung. Da der erfinderische Gedanke sich auch mit einem Microcontroller realisieren läßt, ist keine aufwendige Schaltungsänderung ausgehend vom Stand der Technik nötig. Vielmehr kann es genügen die Software in einem Microcontroller zu ändern, um einen stabilen Lampenbetrieb mit Hilfe der vorliegenden Erfindung zu erreichen. Zudem ist ein erfindungsmäßiges Betriebsgerät auch in der Lage Lampen mit unterschiedlichen Resonanzstellen zu betreiben.

Im allgemeinen ist zwischen den Wechselrichter und die Lampe eine Koppelnetzwerk geschaltet, das eine Übertragungsfunktion aufweist, die die Abhängigkeit der Amplitude des Lampenstroms von der Betriebsfrequenz beschreibt. Das Koppelnetzwerk weist im allgemeinen einen Tiefpasscharakter auf. D. h. bei niedrigen Frequenzen wird der Lampe mehr Energie eingespeist als bei hohen Frequenzen. Dadurch werden gerade die Frequenzen weniger bedämpft werden, bei denen starke Resonanzen auftreten. Dieser Effekt ist um so stärker, je breiter das Frequenzband ist, in dem die Betriebsfrequenz moduliert wird. Ein weiterer Aspekt der Erfindung ist daher, dass die Frequenzabhängigkeit des Koppelnetzwerks kompensiert wird. Dies wird vorteilhaft durch einen zeitlichen Verlauf der Betriebsfrequenz erreicht, der so gewählt ist, dass das Leistungsspektrum der Leistung einer betriebenen Lampe gleichverteilt ist, oder monoton mit der Frequenz ansteigt. Bei einer Gleichverteilung des Leistungsspektrums wird die Übertragungsfunktion gerade kompensiert. Damit die Energieeinkopplung in die Lampe noch mehr zu höheren Frequenzwerten verlagert wird, kann auch eine Überkompensation der Übertragungsfunktion realisiert werden. Dann steigt das Leistungsspektrum der Leistung einer betriebenen Lampe monoton mit der Frequenz an.

Neben der Instabilität der Lampe ergibt sich durch die Frequenzabhängigkeit des Koppelnetzwerks ein weiteres Problem. Ohne Kompensation dieser Frequenzabhängigkeit bewirkt eine Frequenzmodulation der Betriebsfrequenz eine Amplitudenmodulation des Lampenstroms. Dies kann auch ohne Resoanzeffekte zu einem Flackern der Lampe führen. Dieses Problem tritt um so mehr zu Tage, je weiter die Minimalfrequenz und die Maximalfrequenz der Betriebsfrequenz auseinander liegen. Besonders starke Flackererscheinungen können ab einem Wert von 10 kHz für die Differenz zwischen Minimalfrequenz und Maximalfrequenz auftreten. Die oben beschriebene vorteilhafte Kompensation der Übertragungsfunktion löst dieses Problem. Eine Ausdehnung des Frequenzbereichs, in dem die Betriebsfrequenz zu liegen kommt ist deshalb vorteilhaft, weil dann der Energieanteil, der bei einem diskreten Frequenzwert in die Lampe eingekoppelt wird, sinkt. Liegt ein Frequenzwert auf einer Resonanzstelle der Lampe, so wird einer resonanzbedingten Störung weniger Energie zugeführt.

Vorteilhaft ist die Frequenzmodulation der Betriebsfrequenz periodisch mit einer Modulationsfrequenz. Grundsätzlich ist auch ein zeitlicher Verlauf der Betriebsfrequenz möglich, der durch Rauschen oder Chaos beschrieben werden kann. Allerdings ist dann die Realisierung aufwendig und die Schaltentlastung von Halbleiterschaltern im Wechselrichter nicht immer gewährleistet. Die Betriebsfrequenz muss sich so schnell ändern, dass Resonanzstellen nur schwach angeregt werden. Was unter "schwach angeregt" zu verstehen ist, ist oben beschrieben. Vorteilhaft sind Modulationsfrequenzen über 1 Hz.

Vorteilhaft ist, wie oben beschrieben, die Realisierung der Erfindung durch einen Microcontroller. Dann ist der zeitliche Verlauf der Betriebsfrequenz nicht kontinuierlich, sondern es treten nur diskrete Frequenzwerte für eine jeweilige Verweildauer auf. Der Energieeintrag in die Lampe kann in einem Frequenzbereich verstärkt werden indem die Differenz zwischen zwei benachbarten diskreten Frequenzwerten reduziert wird oder indem die Verweildauer verlängert wird. Beide Maßnahmen können auch gleichzeitig ergriffen werden. Eine Energieeinkopplung in die Lampe im Sinne der Erfindung ist dann gegeben, wenn eine durchschnittliche Verweildauer für Frequenzwerte oberhalb des Grenz-Mittelwerts länger ist als eine durchschnittliche Verweildauer für Frequenzwerte unterhalb des Grenz-Mittelwerts.

Eine gleiche Wirkung im Sinne der Erfindung ist dann gegeben, wenn eine durchschnittliche Differenz zwischen zwei benachbarten.diskreten Frequenzwerten für Frequenzwerte oberhalb des Grenz-Mittelwerts kleiner ist, als eine durchschnittliche Differenz zwischen zwei benachbarten diskreten Frequenzwerten für Frequenzwerte unterhalb des Grenz-Mittelwerts.

Üblicherweise erzeugt ein Oszillator die Betriebsfrequenz. Bei der vorteilhaften Realisierung mit einem Microcontroller weist die Betriebsfrequenz jeweils einen diskreten Frequenzwert auf. Typischerweise wird der Oszillator im Microcontroller mit einem sog. Timer realisiert. Eine Steuereinrichtung, die dem Oszillator den jeweiligen diskreten Frequenzwert vorgibt, kann auch durch den Microcontroller realisiert werden. Vorteilhaft sind alle Frequenzwerte, die die Betriebsfrequenz nacheinander annehmen soll, in einer Speichereinrichtung abgespeichert. Die Steuereinrichtung bzw. der Microcontroller liest die Frequenzwerte der Reihe nach aus und stellt den Oszillator entsprechend ein. Die Speichereinrichtung kann auch im Microcontroller integriert sein. Die Steuereinrichtung bzw. der Microcontroller steuert auch die jeweilige Verweildauer des Oszillators auf einem Frequenzwert. Die Verweildauern zu den jeweiligen Frequenzwerten können mit den Frequenzwerten in der Speichereinrichtung hinterlegt sein.

Die Kompensation der Übertragungsfunktion kann auch geregelt erfolgen. Dazu ist eine Messeinrichtung nötig, die geeignet ist, die Amplitude des Lampenstroms der Steuereinrichtung zuzuführen. Die Steuereinrichtung ist dann so ausgelegt ist, dass sie eine Verweildauer wählt, die mit fallender Amplitude wächst. Der Oszillator verharrt dadurch länger bei den Frequenzwerten, die eine relativ niedrige Amplitude des Lampenstroms bewirken. Das Leistungsspektrum der Lampenleistung kann auf diese Weise so beeinflusst werden, dass es gleichverteilt ist, oder, falls eine Überkompensation der Übertragungsfunktion gewünscht ist, monoton mit der Frequenz ansteigt. Statt die Verweildauer, kann gleich wirkend auch die Differenz benachbarter diskreter Frequenzwerte als Stellwert der Regelung herangezogen werden.

Der Wechselrichter bezieht seine Energie von einer Speisespannung. Diese wiederum wird meist aus einer Netzspannung erzeugt. Im allgemeinen wird versucht, die Speisespannung möglichst konstant zu halten, da sich Schwankungen der Speisespannung direkt auf die Amplitude der Ausgangsspannung des Wechselrichters auswirken. Insbesondere ein sog. Ripple der Speisespannung mit der doppelten Frequenz der Netzspannung wird im allgemeinen möglichst klein gehalten. Im Gegensatz dazu kann eine Amplitudenmodulation durch die vorliegende Erfindung kombiniert werden. Die Speisespannung weist dann bei einem Lampenbetrieb einen Maximalwert und einen Minimalwert auf. Bei einer Differenz zwischen Maximalwert und Minimalwert von mindestens 50 V tritt ein wesentlicher Kompensations-Effekt auf.

Wenn der zeitliche Verlauf der Speisespannung (Us) und der zeitliche Verlauf der Betriebsfrequenz derart synchronisiert sind, dass dann, wenn die Betriebsfrequenz ihr Maximum annimmt, auch die Speisespannung ihr Maximum annimmt, ist der Kompensations-Effekt optimal. Ein hoher momentaner Wert der Speisespannung gleicht dann eine starke Dämpfung durch die Übertragungsfunktion zumindest teilweise aus. Der Kompensationseffekt durch die Speisespannung wird erfindungsgemäß mit dem zeitlichen Verlauf der Betriebsfrequenz kombiniert.

Vorteilhaft ist die Realisierung des Wechselrichters als Halbbrücke, da diese kostengünstig ist und hohen Wirkungsgrad aufweist. Es sind jedoch auch andere Wechselrichtertopologien einsetzbar, wie z. B. Tiefsetzer, Hochsetzer, Sperrwandler, Cuk-wandler.

Vorteilhaft ist auch der Einsatz eines phasengesteuerten Vollbrückenwechselrichters. Ein derartiger Wechselrichter ist in folgender Schrift beschrieben: Bill Andreycak, "Phase Shifted Zero Voltage Transition Design Considerations and the UC3875 PWM Controller", Unitrode Application Note U-136A, 1997. Mit Hilfe der Phasensteuerung kann die Energie gesteuert werden, die der Lampe zugeführt wird. Dies kann so in Abhängigkeit von der Betriebsfrequenz geschehen, dass die Übertragungsfunktion des Koppelnetzwerks zumindest teilweise kompensiert wird. Diese Kompensation kann vorteilhaft mit dem erfindungsgemäßen zeitlichen Verlauf der Betriebsfrequenz kombiniert werden.

Vorteilhaft ist die erfindungsgemäße Schaltungsanordnung Teil eines Betriebsgeräts für eine Hochdruck-Gasentladungslampe. Außer der erfindungsgemäßen Schaltungsanordnung kann das Betriebsgerät eine Schaltung zur Zündung der Lampe, zur Funkentstörung, zur Sicherheitsabschaltung oder für andere Hilfsfunktionen enthalten. Außerdem umfasst das Betriebsgerät ein Gehäuse und Klemmen zum Anschluss der Lampe und einer Energieversorgung.

Ein weiterer Aspekt der Erfindung ist ein Verfahren, mit dem eine Lampe ohne Störung durch akustische Resonanzen betrieben werden kann und bei dem das Leistungsspektrum (PL) der Leistung einer betriebenen Lampe (Lp) gleichverteilt ist oder monoton mit der Frequenz ansteigt. Bei diskreten Frequenzwerten berechnet sich der arithmetische Mittelwert $\overline{f}_0$ wie folgt:

$$\overline{f_O} = \frac{1}{T}\sum_{n=1}^{N}(f_n t_n)$$

Dabei wird angenommen, dass die Betriebsfrequenz eine Anzahl von N diskreten Frequenzwerten fn jeweils für eine Verweildauer tn annimmt, wobei nach der Zeit T die N diskreten Frequenzwerte fn erneut durchlaufen werden. T ist somit die Periodendauer einer Modulationsfrequenz.

Vorteilhaft kann das Verfahren auch wie folgt erweitert werden: Ausgehend von einem stabilen Betrieb der Lampe wird der Energieeintrag in die Lampe der Reihe nach bei allen diskreten Frequenzwerten, die die Betriebsfrequenz annehmen kann, gezielt um den Faktor 1,2 bis 5 erhöht. Bei einem Faktor unter 1,2 ist der Effekt schwer messbar, bei über 5 kann es bereits zum Verlöschen der Lampe kommen. Eine Einrichtung zum Detektieren von Resonanzerscheinungen untersucht den Lampenstrom oder die Lampenspannung oder den Lichtstroms der Lampe auf Schwankungen. Falls die Schwankungen einen vorgegeben Grenzwert überschreiten, so wird der erhöhte Energieeintrag auf einen Wert zurückgesetzt, der kürzer ist als 80 % des ursprünglichen Werts. Falls die Schwankungen einen vorgegebenen Grenzwert nicht überschreiten, wird der erhöhte Energieeintrag auf einen Wert zurückgesetzt, der dem ursprünglichen Wert entspricht.

Mit diesem Verfahren wird die Betriebssicherheit bezüglich von Resonanzerscheinungen weiter erhöht. Resonanzstellen, die latent vorhanden sind werden erkannt und ausgeblendet. Die Erhöhung des Energieeintrags kann auf zwei Arten realisiert werden. Wird die Verweildauer bei einem Frequenzwert verlängert, erhöht sich auch der Energieeintrag bei dieser Frequenz. Die zweite, gleich wirkende Art, den Energieeintrag in einem Frequenzbereich zu erhöhen, besteht in einer Reduzierung der Differenz zwischen zwei benachbarten Frequenzwerten.

Kurze Beschreibung der Zeichnung(en)

Im Folgenden soll die Erfindung anhand eines Ausführungsbeispiels näher erläutert werden. Die Figuren zeigen:

Fig. 1 ein Prinzipschaltbild für eine Schaltungsanordnung, mit der sich die Erfindung realisieren lässt,

Fig. 2 zeitlicher Verlauf der Betriebsfrequenz einer erfindungsgemäßen Schaltungsanordnung,

Fig. 3 die spektrale Leistungsdichte der Lampenleistung mit Gleichstromanteil.

Bevorzugte Ausführung der Erfindung

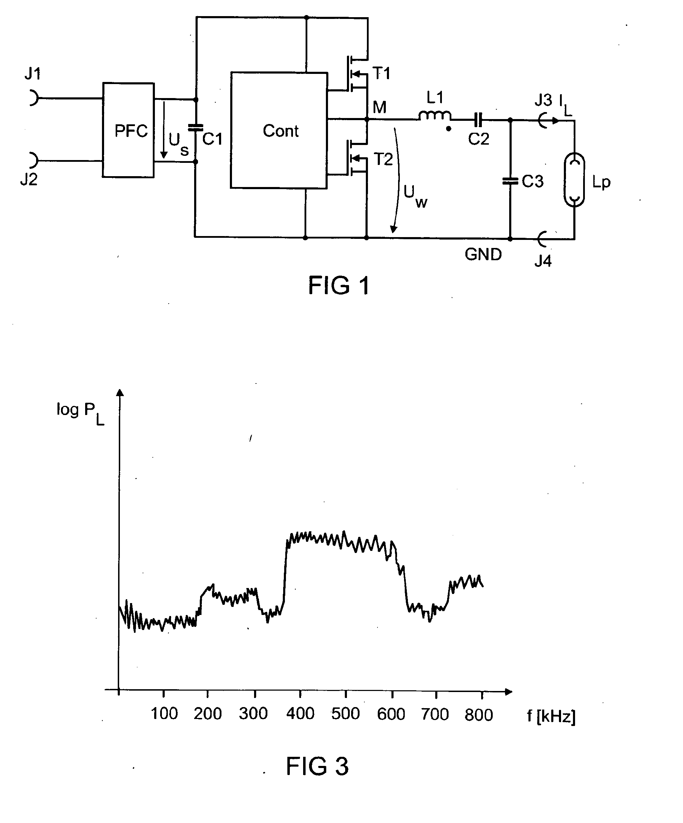

Figur 1 zeigt ein Prinzipschaltbild für eine Schaltungsanordnung, mit der die vorliegende Erfindung realisierbar ist. Die Schaltungsanordnung besitzt zwei Eingangsklemmen J1 und J2 an denen eine gleichgerichtete Netzspannung anschließbar ist. Die Eingangsklemmen J1 und J2 sind gekoppelt mit einer PFC-Stufe, die eine Leistungsfaktorkorrektur bewerkstelligt und eine Speisespannung Us bereit stellt. Parallel zur Speisespannung Us ist ein Speicherkondensator C1 geschaltet, der die Speisespannung Us puffern soll. Zum Betrieb einer 70 W Lampe hat sich für den Speicherkondensator C1 ein Wert von 4,7 Mikrofarad als günstig erwiesen. Mit diesem Wert stellt sich eine starke Amplitudenmodulation der Speisespannung ein, die in Kombination mit der vorliegenden Erfindung zur Kompensation der Übertragungsfunktion des Koppelnetzwerks dienen kann. Ein Potenzial der Speisespannung dient als Bezugspotenzial GND der Schaltungsanordnung.

Die Speisespannung stellt die Energieversorgung für einen Wechselrichter, der als Halbbrückenwechselrichter ausgeführt ist. Er umfasst die Serienschaltung eines oberen und eines unteren Schalters T1 und T2, die parallel zur Speisespannung geschaltet sind. Die Schalter sind als MOSFET ausgeführt, können aber auch als andere Halbleiterschalter ausgeführt sein. Source des oberen Schalters T1 ist mit Drain des unteren Schalters am Verbindungspunkt M verbunden. Die Steueranschlüsse der Schalter, im vorliegenden Fall die Gates von T1 und T2, sind mit einer Kontrolleinrichtung Cont verbunden. Die Kontrolleinrichtung Cont ist auch mit dem Verbindungspunkt M, der Speisespannung Us, und dem Bezugspotenzial GND verbunden. Die Kontrolleinrichtung Cont umfasst einen Oszillator, der eine Betriebsfrequenz erzeugt, mit der die Gates der Schalter T1 und T2 abwechselnd angesteuert werden. Damit entsteht am Verbindungspunkt M bezüglich dem Bezugspotenzial GND eine rechteckförmige Wechselspannung Uw, deren Amplitude der Speisespannung folgt und der Frequenz der Betriebsfrequenz entspricht. Die Wechselspannung Uw stellt die Wechselrichterausgangsspannung des Halbbrückenwechselrichters dar.

Eine Serienschaltung bestehend aus einer Lampendrossel L1 und zwei Kondensatoren C2 und C3 bildet ein Koppelnetzwerk, das zwischen den Verbindungspunkt M und das Bezugspotenzial GND geschaltet ist. Über Klemmen J3 und J4 ist eine Lampe Lp an den Kondensator C3 koppelbar. Nicht dargestellt ist eine Zündeinrichtung, die zur Inbetriebnahme der Lampe kurzfristig eine Hochspannung bereitstellt.

Das Koppelnetzwerk bewerkstelligt eine Impedanztransformation von der Wechselspannung Uw zur Lampe. Es kann auch einen Transformator enthalten. Die Impedanztransformation des Koppelnetzwerks weist eine Übertragungsfunktion auf, die die Frequenzabhängigkeit des Lampenstroms I1 bezogen auf die Wechselspannung Uw beschreibt. Im vorliegenden Fall hat die Übertragungsfunktion Bandpasscharakter. Im allgemeinen liegt die Betriebsfrequenz immer oberhalb der Resonanzfrequenz der Übertragungsfunktion, damit eine Schaltentlastung der Schalter S1 und S2 genutzt werden kann. Oberhalb der Resonanzfrequenz weist die Übertragungsfunktion einen Tiefpasscharakter auf.

Bevorzugt umfasst die Kontrollenrichtung Cont einen Microcontroller und Treiberschaltungen für die Schalter T1 und T2. Durch eine Software ist im Mikrokontroller ein Oszillator realisiert, der die Betriebsfrequenz erzeugt. Im Speicher des Microcontrollers sind die diskreten Frequenzwerte mit zugehörigen Verweildauern abgespeichert. Die Software lässt den Oszillator eine Betriebsfrequenz erzeugen, die der Reihe nach die abgespeicherten Frequenzwerte für die abgespeicherte Verweildauer aufweist. Nachdem der Microcontroller einen letzten abgespeicherten Frequenzwert ausgelesen hat, gibt es zwei Möglichkeiten weiter zu verfahren: Entweder der Microcontroller beginnt die Frequenzwerte wieder mit einem ersten Frequenzwert auszulesen, oder die Frequenzwerte werden nun in umgekehrter Reihenfolge ausgelesen bis wieder der erste Frequenzwert erreicht ist. Im ersten Fall ergibt sich ein eher sägezahnförmiger Frequenzverlauf über Zeit während, sich im zweiten Fall sich ein eher dreieckförmiger Frequenzverlauf über Zeit ergibt. Der eher dreieckförmige Frequenzverlauf hat den Vorteil, dass keine großen Sprünge der Betriebsfrequenz auftreten.

Die reine Sägezahn- und Dreiecksform bedeuten einen linearen Zusammenhang zwischen Zeit und Betriebsfrequenz. Dieser entspricht in der Regel nicht der Lehre der vorliegenden Erfindung. Über den Abstand der Frequenzwerte und / oder die Verweildauer muss ein nichtlinearer oder nur stückweise linearer Zusammenhang realisiert werden. Wie oben ausgeführt, ist dabei wichtig, dass bei höheren Frequenzen mehr Energie in die Lampe eingekoppelt wird als bei niedrigen. Als technische Lehre dazu dient der oben ausgeführte Zusammenhang zwischen Grenz-Mittelwert und arithmetischem Mittelwert der Betriebsfrequenz.

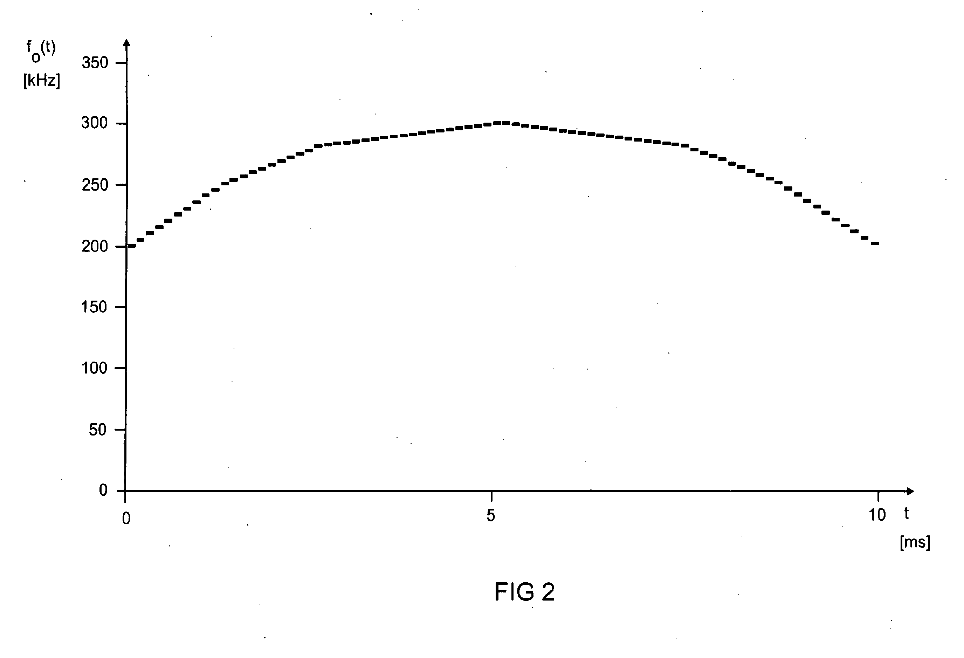

In Figur 2 ist der zeitlicher Verlauf der Betriebsfrequenz einer erfindungsgemäßen Schaltungsanordnung dargestellt. Es handelt sich um einen eher dreieckförmigen, stückweise linearen Verlauf. Eher dreieckförmig deshalb, weil die Betriebsfrequenz von einer Minimalfrequenz 5 ms lang bis zu einer Maximalfrequenz ansteigt und dann nicht sofort auf die Minimalfrequenz zurückfällt, sondern während weiterer 5 ms wieder auf die Minimalfrequenz absinkt. Die Minimalfrequenz beträgt 200 kHz und die Maximalfrequenz 300 kHz. Damit ergibt sich ein Grenzmittelwert von 250 kHz. Der arithmetische Mittelwert beträgt 266 kHz und ist damit erfindungsgemäß größer als der Grenzmittelwert. Typisch für einen erfindungsgemäßen Frequenzverlauf ist, dass er im wesentlichen bei höheren Frequenzen verläuft, als es die lineare Verbindungslinie zwischen Minimalfrequenz und Maximalfrequenz darstellt.

Aus der Darstellung in Figur 2 geht hervor, dass im Ausführungsbeispiel die Verweildauer näherungsweise für alle Frequenzwerte konstant ist. Der zeitliche Verlauf wird erreicht durch eine unterschiedliche Differenz benachbarter Frequenzwerte. Bei Frequenzwerten nahe der Minimalfrequenz sind die Abstände größer als bei Frequenzwerten nahe der Maximalfrequenz.

Nach 10 ms wiederholt sich der zeitliche Verlauf periodisch. Dies ist in Figur 2 nicht mehr dargestellt. Der periodische Verlauf definiert eine Modulationsfrequenz von 100 Hz. Diese Modulationsfrequenz liegt deutlich über 1 Hz, so dass diskrete Frequenzwerte nicht so lange auf die Lampe wirken, dass Plasma- oder Gasströmungen im Entladungsgefäß der Lampe zustande kämen. Vorteilhaft ist der Wert 100 Hz deshalb gewählt, weil dies der Wert der Ripple-Frequenz der Speisespannung bei 50 Hz Netzfrequenz ist. Damit kann die Amplituden-Modulation der Speisespannung synchron zum Zeitverlauf der Betriebsfrequenz die Übertragungsfunktion des Koppelnetzwerks kompensieren.

Figur 3 zeigt ein Beispiel für die spektrale Leistungsdichte log PL der in eine Lampe Lp eingespeisten Leistung in logarithmischer Darstellung. Im Leistungsspektrum sind im Vergleich zum Spektrum des Lampenstroms I1 die auftretenden Frequenzen verdoppelt. Deutlich erkennt man ein Frequenzband zwischen 360 kHz und 620 kHz, das sich durch eine Frequenzmodulation der Betriebsfrequenz zwischen einer Minimalfrequenz von 180 kHz und einer Maximalfrequenz von 310 kHz ergibt. Die Leistungsdichte ist in diesem Frequenzband im wesentlichen konstant. Dies ist eine vorteilhafte Folge der Kompensation der Übertragungsfunktion des Koppelnetzwerks.

Zwischen 180 kHz und 310 kHz zeigt Figur 3 einen weiteres Frequenzband, in dem Leistung in die Lampe gekoppelt wird. Dieses Frequenzband entsteht durch einen Gleichanteil, der dem Lampenstrom I1 überlagert wird. Dieser Gleichanteil wird vorteilhaft dadurch erzeugt, dass in einem Halbbrückenwechselrichter die Schalter nicht genau symmetrisch schalten, sondern die Einschaltdauer jeweils eines Schalters überwiegt. Durch den Gleichanteil kann der Frequenzbereich, in dem Energie in die Lampe eingekoppelt wird, verbreitert werden, ohne das Frequenzband zu erweitern, das durch die Minimalfrequenz und die Maximalfrequenz aufgespannt wird. Die Amplitude des Frequenzbands, das durch den Gleichanteil erzeugt wird, ist abhängig vom Wert des überlagerten Gleichanteils.

In Figur 3 ist ansatzweise ein weiteres Frequenzband zu erkennen, das bei 720 kHz beginnt. Diese Frequenzband kommt durch die Vervierfachung der Grundfrequenzen wie Minimalfrequenz und Maximalfrequenz zustande.

**Patentansprüche**

1. Schaltungsanordnung zum Bereitstellen einer Lampenleistung an eine Hochdruck-Gasentladungslampe (Lp), mit einem Wechselrichter (T1, T2), der an die Hochdruck-Gasentladungslampe (Lp) einen Lampenstrom (IL) liefert, der im wesentlichen ein Wechselstrom mit einer Betriebsfrequenz ist, die in einem Frequenzbereich zwischen einer Minimalfrequenz und einer Maximalfrequenz frequenzmoduliert ist,
   wodurch sich zum einen ein Grenz-Mittelwert definiert, der gleich der Hälfte der Summe von Minimalfrequenz und Maximalfrequenz ist,
   und zum anderen ein arithmetischer Mittelwert definiert, der gleich dem zeitlichen Mittelwert der in einem Lampenbetrieb durchlaufenen Frequenzwerte für die Betriebsfrequenz ist,
   wobei der Grenz-Mittelwert kleiner ist als der arithmetische Mittelwert,
   wobei die Schaltungsanordnung ein Koppelnetzwerk (L1, C2, C3)aufweist, das zwischen den Wechselrichter (T1, T2) und die Lampe (Lp) geschaltet ist und eine Übertragungsfunktion aufweist, die die Abhängigkeit der Amplitude des Lampenstroms (IL) von der Betriebsfrequenz beschreibt,
   wobei den Wechselrichter eine Speisespannung (Us) speist, wobei die Speisespannung (Us) zum Betrieb einer Hochdruck-Gasentladungslampe (Lp) ihre Energie aus einer Netzspannung bezieht und die Speisespannung (Us) bei einem Lampenbetrieb einen Maximalwert und einen Minimalwert aufweist,
   wobei die Schaltungsanordnung **dadurch gekennzeichnet ist,**
   **dass** die Differenz zwischen Maximalwert und Minimalwert der Speisespannung mindestens 50 V ist und eine Kontrolleinrichtung (Cont) den zeitlichen Verlauf der Betriebsfrequenz derart mit dem zeitlichen Verlauf der Speisespannung (Us) synchronisiert, dass dann, wenn die Betriebsfrequenz ihr Maximum annimmt, auch die Speisespannung (Us) ihr Maximum annimmt.

2. Schaltungsanordnung nach Anspruch 1, **dadurch gekennzeichnet dass** der zeitliche Verlauf der Betriebsfrequenz so gewählt ist, dass das Leistungsspektrum (PL) der Leistung einer betriebenen Lampe (Lp) gleichverteilt ist, oder monoton mit der Frequenz ansteigt.

3. Schaltungsanordnung nach Anspruch 1 oder 2, **dadurch gekennzeichnet,**
   **dass** die Frequenzmodulation der Betriebsfrequenz periodisch ist mit einer Modulationsfrequenz, die größer ist als 1 Hz.

4. Schaltungsanordnung nach einem der vorigen Ansprüche, **dadurch gekennzeichnet,**
   **dass** die Betriebsfrequenz nur diskrete Frequenzwerte für eine jeweilige Verweildauer annimmt.

5. Schaltungsanordnung nach Anspruch 4, **dadurch gekennzeichnet,**
   **dass** eine durchschnittliche Verweildauer für Frequenzwerte oberhalb des Grenz-Mittelwerts länger ist als eine durchschnittliche Verweildauer für Frequenzwerte unterhalb des Grenz-Mittelwerts.

6. Schaltungsanordnung nach Anspruch 4 oder 5, **dadurch gekennzeichnet,**
   **dass** eine durchschnittliche Differenz zwischen zwei benachbarten diskreten Frequenzwerten für Frequenzwerte oberhalb des Grenz-Mittelwerts kleiner ist, als
   eine durchschnittliche Differenz zwischen zwei benachbarten diskreten Frequenzwerten für Frequenzwerte unterhalb des Grenz-Mittelwerts.

7. Schaltungsanordnung nach einem der Ansprüche 4 bis 6, **gekennzeichnet durch**

   -- einen Oszillator, der die Betriebsfrequenz mit einem diskreten Frequenzwert erzeugt,
   -- eine Steuereinrichtung, die dem Oszillator den jeweiligen diskreten Frequenzwert vorgibt,
   -- eine Speichereinrichtung in der die diskreten Frequenzwerte und die entsprechenden Verweildauern abgespeichert sind und von der Steuereinrichtung auslesbar sind.

8. Schaltungsanordnung nach einem der Ansprüche 4 bis 6, **gekennzeichnet durch**

   -- einen Oszillator, der die Betriebsfrequenz mit einem diskreten Frequenzwert erzeugt,
   -- eine Steuereinrichtung, die dem Oszillator den jeweiligen diskreten Frequenzwert vorgibt,
   -- eine Speichereinrichtung in der die diskreten Frequenzwerte abgespeichert sind und von der Steuereinrichtung auslesbar sind,
   -- eine Messeinrichtung, die geeignet ist, die Amplitude des Lampenstroms der Steuereinrichtung zuzuführen, wobei die Steuereinrichtung so ausgelegt ist, dass sie eine Verweildauer wählt, die mit fallender Amplitude wächst.

9. Schaltungsanordnung nach einem der vorigen Ansprüche, **dadurch gekennzeichnet, dass** die Differenz zwischen Maximalfrequenz und Minimalfrequenz mindestens 10 kHz ergibt.

10. Schaltungsanordnung nach einem der vorigen Ansprüche, **dadurch gekennzeichnet, dass** der Wechselrichter ein Halbbrückenwechselrichter ist.

11. Schaltungsanordnung nach einem der vorigen Ansprüche, **dadurch gekennzeichnet, dass** der Wechselrichter ein phasengesteuerter Vollbrückenwechselrichter ist.

12. Betriebsgerät zum Betreiben einer Hochdruck-Gasentladungslampe (Lp), **dadurch gekennzeichnet, dass** das Betriebsgerät eine Schaltungsanordnung gemäß einem der vorigen Ansprüche umfasst.

13. Verfahren zum Betreiben einer Hochdruck-Gasentladungslampe (Lp) mit einem Wechselrichter (T1, T2) und mit einem Koppelnetzwerk (L1, C2, C3), das zwischen den Wechselrichter (T1, T2) und die Lampe (Lp) geschaltet ist und eine Übertragungsfunktion aufweist, die die Abhängigkeit der Amplitude des Lampenstroms (IL) von der Betriebsfrequenz beschreibt, wobei der Wechselrichter aus einer Speisespannung (Us) gespeist wird, wobei die Speisespannung (Us) zum Betrieb einer Hochdruck-Gasentladungslampe (Lp) ihre Energie aus einer Netzspannung bezieht und die Speisespannung (Us) bei einem Lampenbetrieb einen Maximalwert und einen Minimalwert aufweist, deren Differenz mindestens 50 V ist, wobei das Verfahren folgende Schritte aufweist:

    -- auslesen eines Frequenzwerts und einer dazugehörigen Verweildauer aus einer Speichereinrichtung
    -- bereitstellen eines Wechselstroms für eine Hochdruck-Gasentladungslampe (Lp) mit einer Betriebsfrequenz, deren Wert dem zuletzt ausgelesenen Frequenzwerts entspricht,
    -- beibehalten des Frequenzwerts für die zuletzt ausgelesene Verweildauer,
    -- auslesen eines nächsten Frequenzwerts und einer dazugehörigen Verweildauer aus einer Speichereinrichtung,
    -- fortwährendes wiederholen der ersten vier Schritte

    wobei die Frequenzwerte und die dazugehörigen Verweildauern so gewählt sind, dass die Hälfte der Summe aus dem größten und dem kleinsten vorkommenden Frequenzwert kleiner ist als der Mittelwert der ausgelesenen und mit der dazugehörigen Verweildauer gewichteten Frequenzwerte wobei das Verfahren **gekennzeichnet ist durch** folgende Schritte:

    -- Synchrinisieren des zeitlichen Verlaufs der Speisespannung (Us) mit dem zeitlichen Verlauf der Betriebsfrequenz,
    -- Einstellen des Maximums der Betriebsfrequenz wenn die Speisespannung (Us) auf ihr Maximum eingestellt wird.

14. Verfahren gemäß Anspruch 13, **dadurch gekennzeichnet, dass** die Frequenzwerte und Verweildauern so gewählt sind, dass das Leistungsspektrum (PL) der Leistung einer betriebenen Lampe (Lp) gleichverteilt ist oder monoton mit der Frequenz ansteigt.

15. Verfahren gemäß Anspruch 13, **gekennzeichnet durch** folgende Schritte:

    -- verlängern der Verweildauer eines Frequenzwerts um einen Faktor, der in einem Bereich zwischen 1,2 und 5 liegt,
    -- untersuchen des Lampenstroms (I1) oder der Lampenspannung oder des Lichtstroms der Lampe auf Schwankungen,
    -- falls die Schwankungen einen vorgegebenen Grenzwert überschreiten, wird die verlängerte Verweildauer auf einen Wert zurückgesetzt, der kürzer ist als 80 % des ursprünglichen Werts,
    -- falls die Schwankungen einen vorgegebenen Grenzwert nicht überschreiten, wird die verlängerte Verweildauer auf einen Wert zurückgesetzt, der dem ursprünglichen Wert entspricht,
    -- durchführen der vorigen Schritte für die weiteren Frequenzwerte, die die Betriebsfrequenz annimmt.

**Claims**

1. Circuit arrangement for providing a lamp wattage to a high-pressure gas discharge lamp (Lp), comprising an inverter (T1, T2) which supplies to the high-pressure gas discharge lamp (Lp) a lamp current (IL) which is essentially an alternating current with an operating frequency which is frequency modulated in a frequency range between a minimum frequency and a maximum frequency, as a result of which, on the one hand, a limit mean is defined which is equal to one half of the sum of minimum frequency and maximum frequency, and, on the other hand, an arithmetic mean is defined which is equal to the temporal mean of the frequency values for the operating frequency, swept in a lamp operation, the limit mean being less than the arithmetic mean, the circuit arrangement comprising a coupling network (L1, C2, C3) which is connected between the inverter (T1, T2) and the lamp (Lp) and has a transfer function which describes the dependence of the amplitude of the lamp current (IL) on the operating frequency, the inverter being supplied with a supply voltage (Us), wherein the supply voltage (Us), for operating a high-pressure gas discharge lamp (Lp), obtains its energy from a line voltage and the supply voltage (Us), during a lamp operation, has a maximum value and a minimum value, the circuit arrangement being **characterized in that** the difference between maximum value and minimum value for the supply voltage, is at least 50 V, and a control device (Cont) synchronizes the variation of the operating frequency with time with the variation of the supply voltage (Us) with time in such a manner that, when the operating frequency assumes its maximum, the supply voltage (Us) also assumes its maximum.

2.  Circuit arrangement according to Claim 1, **characterized in that** the variation of the operating frequency with time is selected in such a manner that the power spectrum (PL) of the power of an operated lamp (Lp) is uniformly distributed or increases monotonically with frequency.

3.  Circuit arrangement according to Claim 1 or 2, **characterized in that** the frequency modulation of the operating frequency is periodic with a modulation frequency which is greater than 1 Hz.

4.  Circuit arrangement according to one of the preceding claims, **characterized in that** the operating frequency only assumes discrete frequency values for a respective dwell time.

5.  Circuit arrangement according to Claim 4, **characterized in that** an average dwell time for frequency values above the limit mean is longer than an average dwell time for frequency values below the limit mean.

6.  Circuit arrangement according to Claim 4 or 5, **characterized in that** an average difference between two adjacent discrete frequency values is less for frequency values above the limit mean than an average difference between two adjacent discrete frequency values for frequency values below the limit mean.

7.  Circuit arrangement according to one of Claims 4 to 6, **characterized by**

    -- an oscillator which generates the operating frequency with a discrete frequency value,
    -- a control device which determines the respective discrete frequency value for the oscillator,
    -- a storage device in which the discrete frequency values and the corresponding dwell times are stored and can be read out by the control device.

8.  Circuit arrangement according to one of Claims 4 to 6, **characterized by**

    -- an oscillator which generates the operating frequency with a discrete frequency value,
    -- a control device which determines the respective discrete frequency value for the oscillator,
    -- a storage device in which the discrete frequency values are stored and can be read out by the control device,
    -- a measuring device which is suitable for supplying the amplitude of the lamp current to the control device, the control device being designed in such a manner that it selects a dwell time which increases with falling amplitude.

9.  Circuit arrangement according to one of the preceding claims, **characterized in that** the difference between maximum frequency and minimum frequency is at least 10 kHz.

10. Circuit arrangement according to one of the preceding claims, **characterized in that** the inverter is a half-bridge inverter.

11. Circuit arrangement according to one of the preceding claims, **characterized in that** the inverter is a phase-controlled full-bridge inverter.

12. Operating device for operating a high-pressure gas discharge lamp (Lp), **characterized in that** the operating device comprises a circuit arrangement according to one of the preceding claims.

13. Method for operating a high-pressure gas discharge lamp (Lp) comprising an inverter (T1, T2) and a coupling network (L1, C2, C3) which is connected between the inverter (T1, T2) and the lamp (Lp) and has a transfer function which describes the dependence of the amplitude of the lamp current (IL) on the operating frequency, the inverter being supplied from a supply voltage (Us), wherein the supply voltage (Us), for operating a high-pressure gas discharge lamp (Lp), obtains its energy from a line voltage and the supply voltage (Us), during a lamp operation, has a maximum value and a minimum value, the difference between said values being at least 50 V, the method having the following steps:

    -- reading a frequency value and an associated dwell time out of a storage device

-- providing an alternating current for a high-pressure gas discharge lamp (Lp), having an operating frequency, the value of which corresponds to the last frequency value read out,

-- retaining the frequency value for the last dwell time read out,

-- reading a next frequency value and an associated dwell time out of a storage device,

-- continuously repeating the first four steps

wherein the frequency values and the associated dwell times are selected in such a manner that one half of the sum of the greatest and the smallest frequency value occurring is less than the mean value of the frequency values read out and weighted with the associated dwell time,

wherein the method is **characterized by** the following steps:

-- synchronizing the variation of the supply voltage (Us) with time with the variation of the operating frequency with time,

-- setting the maximum of the operating frequency when the supply voltage (Us) is set to its maximum.

14. Method according to Claim 13, **characterized in that** the frequency values and dwell times are selected in such a manner that the power spectrum (PL) of the power of an operated lamp (Lp) is uniformly distributed or increases monotonically with frequency.

15. Method according to Claim 13, **characterized by** the following steps:

-- extending the dwell time of a frequency value by a factor which is within a range of between 1.2 and 5,

-- examining the lamp current (I1) or the lamp voltage or the luminous flux of the lamp for fluctuations,

-- if the fluctuations exceed a predetermined limit value, the extended dwell time is set back to a value which is shorter than 80% of the original value,

-- if the fluctuations do not exceed a predetermined limit value, the extended dwell time is set back to a value which corresponds to the original value,

-- performing the previous steps for the further frequency values assumed by the operating frequency.

**Revendications**

1. Agencement de circuit pour fournir une puissance de lampe à une lampe à décharge haute pression (Lp), comportant un onduleur (T1, T2) qui délivre à la lampe à décharge haute pression (Lp) un courant de lampe (IL) qui est essentiellement un courant alternatif avec une fréquence de fonctionnement, modulée en fréquence dans une gamme de fréquences comprises entre une fréquence minimale et une fréquence maximale,

permettant ainsi de définir d'une part une moyenne limite, qui est égale à la moitié de la somme des fréquences minimale et maximale,

et de définir d'autre part une moyenne arithmétique, qui est égale à la moyenne temporelle des valeurs de fréquence parcourues pendant un fonctionnement de la lampe, pour la fréquence de fonctionnement,

la moyenne limite étant inférieure à la moyenne arithmétique,

ledit agencement de circuit comportant un réseau de couplage (L1, C2, C3), monté entre l'onduleur (T1, T2) et la lampe (Lp) et présentant une fonction de transfert qui décrit la dépendance de l'amplitude du courant de lampe (IL) de la fréquence de fonctionnement,

ledit onduleur étant alimenté par une tension d'alimentation (Us), ladite tension d'alimentation (Us), pour faire fonctionner une lampe à décharge haute pression (Lp), obtenant son énergie à partir d'une tension du secteur, et ladite tension d'alimentation (Us) présentant pendant un fonctionnement de la lampe une valeur maximale et une valeur minimale,

ledit agencement de circuit étant **caractérisé en ce que** la différence entre valeur maximale et valeur minimale de la tension d'alimentation est d'au moins 50 V,

et qu'un dispositif de contrôle (Cont) synchronise la variation temporelle de la fréquence de fonctionnement avec la variation temporelle de la tension d'alimentation (Us) de telle façon que lorsque la fréquence de fonctionnement prend sa valeur maximale, la tension d'alimentation (Us) prend également sa valeur maximale.

2. Agencement de circuit selon la revendication 1, **caractérisé en ce que** la variation temporelle de la fréquence de fonctionnement est choisie de telle façon que le spectre de puissance (PL) de la puissance d'une lampe (Lp) en fonctionnement est réparti uniformément, ou croît de manière monotone avec la fréquence.

3. Agencement de circuit selon la revendication 1 ou 2, **caractérisé en ce que** la modulation de fréquence de la fréquence de fonctionnement est périodique, à une fréquence de modulation supérieure à 1 Hz.

4. Agencement de circuit selon l'une des revendications précédentes, **caractérisé en ce que**
la fréquence de fonctionnement ne prend que des valeurs de fréquence discrètes pour une durée de séjour respective.

5. Agencement de circuit selon la revendication 4, **caractérisé en ce que**
une durée de séjour moyenne pour des valeurs de fréquence situées au-dessus de la moyenne limite est plus longue qu'une durée de séjour moyenne pour des valeurs de fréquence situées au-dessous de la moyenne limite.

6. Agencement de circuit selon la revendication 4 ou 5, **caractérisé en ce que**
une différence moyenne entre deux valeurs de fréquence discrètes voisines pour des valeurs de fréquence situées au-dessus de la moyenne limite est plus faible qu'une différence moyenne entre deux valeurs de fréquence discrètes voisines pour des valeurs de fréquence situées au-dessous de la moyenne limite.

7. Agencement de circuit selon l'une des revendications 4 à 6, **caractérisé par**

   -- un oscillateur, qui génère la fréquence de fonctionnement avec une valeur de fréquence discrète,
   -- un moyen de commande, qui impose à l'oscillateur la valeur de fréquence discrète respective,
   -- un moyen de mémorisation, dans lequel les valeurs de fréquence discrètes et les durées de séjour correspondantes sont stockées et peuvent être extraites par le moyen de commande.

8. Agencement de circuit selon l'une des revendications 4 à 6, **caractérisé par**

   -- un oscillateur, qui génère la fréquence de fonctionnement avec une valeur de fréquence discrète,
   -- un moyen de commande, qui impose à l'oscillateur la valeur de fréquence discrète respective,
   -- un moyen de mémorisation, dans lequel les valeurs de fréquence discrètes sont stockées et peuvent être extraites par le moyen de commande,
   -- un moyen de mesure, apte à amener l'amplitude du courant de lampe au moyen de commande, le moyen de commande étant configuré de façon à choisir une durée de séjour qui croît avec l'amplitude décroissante.

9. Agencement de circuit selon l'une des revendications précédentes, **caractérisé en ce que**
la différence entre fréquence maximale et fréquence minimale est égale à au moins 10 kHz.

10. Agencement de circuit selon l'une des revendications précédentes, **caractérisé en ce que**
l'onduleur est un onduleur en demi-pont.

11. Agencement de circuit selon l'une des revendications précédentes, **caractérisé en ce que**
l'onduleur est un onduleur en pont complet à commande de phase.

12. Dispositif pour faire fonctionner une lampe à décharge haute pression (Lp), **caractérisé en ce que**
le dispositif comprend un agencement de circuit selon l'une des revendications précédentes.

13. Procédé pour faire fonctionner une lampe à décharge haute pression (Lp) avec un onduleur (T1, T2) et avec un réseau de couplage (L1, C2, C3), monté entre l'onduleur (T1, T2) et la lampe (Lp) et présentant une fonction de transfert qui décrit la dépendance de l'amplitude du courant de lampe (IL) de la fréquence de fonctionnement,
ledit onduleur étant alimenté à partir d'une tension d'alimentation (Us), ladite tension d'alimentation (Us), pour faire fonctionner une lampe à décharge haute pression (Lp), obtenant son énergie à partir d'une tension du secteur, et ladite tension d'alimentation (Us) présentant pendant un fonctionnement de la lampe une valeur maximale et une valeur minimale, dont la différence est d'au moins 50 V,
ledit procédé comprenant les étapes suivantes :

   -- extraire d'un moyen de mémorisation une valeur de fréquence et une durée de séjour associée,
   -- fournir un courant alternatif pour une lampe à décharge haute pression (Lp) avec une fréquence de fonctionnement, dont la valeur correspond à la dernière valeur de fréquence extraite,
   -- conserver la valeur de fréquence pour la dernière durée de séjour extraite,
   -- extraire d'un dispositif de mémorisation une valeur de fréquence suivante et une durée de séjour associée,
   -- répéter continuellement les quatre premières étapes, les valeurs de fréquence et les durées de séjour associées étant choisies de telle façon que la moitié de la somme des valeurs de fréquence maximale et minimale se présentant est plus petite que la moyenne des valeurs de fréquence extraites et pondérées avec la durée de séjour associée,

ledit procédé étant **caractérisé par** les étapes suivantes:

-- synchroniser la variation temporelle de la tension d'alimentation (Us) avec la variation temporelle de la fréquence de fonctionnement,
-- régler la valeur maximale de la fréquence de fonctionnement lorsque la tension d'alimentation (Us) est réglée sur sa valeur maximale.

**14.** Procédé selon la revendication 13, **caractérisé en ce que** les valeurs de fréquence et durées de séjour sont choisies de telle façon que le spectre de puissance (PL) de la puissance d'une lampe (Lp) en fonctionnement est réparti uniformément, ou croît de manière monotone avec la fréquence.

**15.** Procédé selon la revendication 13, **caractérisé par** les étapes suivantes :

-- prolonger la durée de séjour d'une valeur de fréquence d'un facteur situé dans une plage comprise entre 1,2 et 5,
-- examiner le courant de lampe (IL) ou la tension de lampe ou le flux lumineux de la lampe quant à des variations,
-- si les variations dépassent une valeur limite imposée, la durée de séjour prolongée est remise à une valeur inférieure à 80 % de la valeur initiale,
-- si les variations ne dépassent pas une valeur limite imposée, la durée de séjour prolongée est remise à une valeur correspondant à la valeur initiale,
-- effectuer les étapes précédentes pour les autres valeurs de fréquence que prend la fréquence de fonctionnement.

FIG 1

FIG 3

FIG 2

EP 1 961 274 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030111968 A1, Trestman
- EP 0893943 A, Van Tichelen
- EP 1519637 A2

**In der Beschreibung aufgeführte Nicht-Patentliteratur**

- **Bill Andreycak.** Phase Shifted Zero Voltage Transition Design Considerations and the UC3875 PWM Controller. *Unitrode Application Note U-136A,* 1997